# FASCICULE DE BREVET EUROPEEN

(11) **EP 2 951 356 B1**
(45) Date de publication et mention de la délivrance du brevet: **18.07.2018**
(21) Numéro de dépôt: 14702581.1
(22) Date de dépôt: 03.02.2014
(51) Int. Cl.: E02D 27/52

(54) **CHASSIS D'HYDROLIENNE**
FASSUNG FÜR EIN WELLENKRAFTWERK
FRAME FOR AN UNDERWATER TURBINE

(30) Priorité: 04.02.2013 FR 1350923
(43) Date de publication de la demande: 09.12.2015
(73) Titulaire: Fonderie et Mecanique Generale Castelbriantaise (FMGC), 44110 Soudan (FR)
(72) Inventeur: THUET, Gérard, F-49320 Vauchretien (FR)
(74) Mandataire: Vidon Brevets & Stratégie
(86) Numéro de dépôt international: PCT/EP2014/052026
(87) Numéro de publication internationale: WO 2014/118365

(56) Documents cités:
- WO-A1-2012/019224

## Description

### 1. Le domaine de l'invention

Le domaine de l'invention est celui des comme connue par le document WO 2012/19224 A1. Plus précisément, l'invention concerne les châssis d'hydroliennes.

Une hydrolienne comporte un ou plusieurs rotors disposés sur un châssis destiné à reposer sur un fond sous-marin. Elle est immergée dans une zone à fort courant, si possible à proximité des côtes, avec d'autres hydroliennes de même type, qui forment ensemble un parc hydrolien. La force des courants marins actionne les pâles du ou des rotors des hydroliennes. L'énergie mécanique produite par la rotation des pâles est transformée en énergie électrique, qui est transportée par câbles pour son utilisation généralement sur la terre ferme. La profondeur d'installation d'une hydrolienne peut par exemple être comprise entre 30 et 40 mètres sous le niveau de la mer, sur le sol sous-marin.

### 2. Solutions de l'art antérieur

Il est nécessaire que le châssis assure la stabilité de l'hydrolienne après son installation sur le fond sous-marin.

Pour garantir la stabilité de l'hydrolienne, le châssis doit notamment présenter une masse suffisante.

Il est connu de réaliser le châssis d'hydrolienne en béton, notamment en béton armé, qui est posé sur le sol sous-marin. Le châssis doit être très étendu, sur une surface d'environ 115m² par exemple, pour assurer la stabilité de l'hydrolienne.

Un inconvénient d'un tel châssis est que les coûts d'installation d'une hydrolienne sont très élevés à cause de la grande taille du châssis en béton. Un autre inconvénient est lié au fait que le béton n'est pas recyclable, ce qui pose problème en fin de vie de l'hydrolienne ou du parc hydrolien comprenant plusieurs hydroliennes.

### 3. Objectifs de l'invention

L'invention a ainsi pour objectif de pallier tout ou partie des inconvénients de l'art antérieur.

Plus précisément, l'invention a pour objectif de fournir un châssis d'hydrolienne qui soit plus facile et moins coûteux à installer.

L'invention a encore pour objectif de fournir un châssis d'hydrolienne qui soit recyclable au moins partiellement.

L'invention a encore pour objectif de fournir un châssis d'hydrolienne qui soit plus compact.

L'invention a encore pour objectif de fournir un châssis d'hydrolienne qui soit modulable.

### 4. Résumé de l'invention

L'invention répond à tout ou partie des objectifs précités grâce à un châssis d'hydrolienne comprenant :
- un support pour au moins une hydrolienne, réalisé au moins partiellement en béton, notamment en béton armé ;
- un ensemble de lestage configuré pour coopérer avec le support de manière à assurer le maintien sur le sol sous-marin du châssis, ledit ensemble de lestage présentant une masse volumique comprise entre 6500 kg/m³ et 8000 kg/m³.

Grâce à l'invention, on dispose d'un ensemble de lestage qui est environ 3,5 à 4 fois plus dense que le béton de telle sorte qu'avec moins de matière, on peut obtenir les mêmes performances pour le châssis.

Ainsi, le châssis d'hydrolienne selon l'invention peut par exemple mesurer 18 mètres de long, grâce à l'invention, à comparer aux 40 mètres du châssis de l'art antérieur.

La proportion de béton peut être de 50% environ et la proportion de lest de l'ensemble de lestage peut être de 50% environ par rapport à la masse totale du châssis.

Un autre avantage de l'invention est qu'il est possible de moduler le châssis de l'hydrolienne dans le temps, en ajoutant un élément de lestage supplémentaire si nécessaire, par exemple en cas d'ajout de rotor sur le châssis.

De plus, le châssis d'hydrolienne conforme à l'invention est plus facilement transportable et déplaçable que le châssis de l'art antérieur.

Selon un mode de réalisation préféré, l'ensemble de lestage est réalisé avec de la fonte, notamment de la fonte présentant une masse volumique comprise entre 7000 kg/m³ et 7200 kg/m³, en particulier une masse de 7200 kg/m³. La fonte, formée d'un alliage fer-carbone, peut être de tout type, sans sortir du cadre de l'invention. Elle peut en particulier être à graphite lamellaire.

L'ensemble de lestage comporte avantageusement au moins un premier et un deuxième éléments distincts configurés pour lester chacun une partie du support. Grâce à cet aspect de l'invention, il est possible de lester plusieurs parties du châssis à l'aide de l'ensemble de lestage formé de plusieurs éléments distincts.

Le nombre d'éléments distincts de l'ensemble de lestage peut être supérieur à deux sans sortir du cadre de l'invention.

Le support peut comporter par exemple au moins un logement formé d'au moins un fond configuré pour recevoir tout ou partie de l'ensemble de lestage, notamment au moins un élément de l'ensemble de lestage.

Le fond peut être plein ou ajouré ou partiel sans sortir du cadre de l'invention.

Le logement peut comporter au moins une, voire deux ou encore davantage, parois latérales, par exemple prévues pour épouser latéralement la forme d'un élément de l'ensemble de lestage qu'il loge. Dans ce cas, l'ensemble de lestage coopère étroitement avec le support pour assurer le lestage du châssis.

Dans un mode de réalisation particulier, le support comporte deux logements, à savoir un premier et un deuxième logements, chaque logement étant configuré pour recevoir au moins un des éléments de l'ensemble de lestage.

Le nombre de logements n'est pas limité, et le support peut comporter un nombre de logements supérieur à deux sans sortir du cadre de l'invention.

Le support peut, par exemple, former un tripode à base triangulaire, notamment sensiblement isocèle. Le support repose dans ce cas sur trois pieds se trouvant par exemple chacun à l'un des sommets du triangle de base.

Dans le mode de réalisation particulier ci-dessus, le premier élément de l'ensemble de lestage peut par exemple être configuré pour lester le premier logement du support formé dans un angle de la base triangulaire du support, et le deuxième élément de lestage peut par exemple être configuré pour lester le deuxième logement formé dans une partie centrale du support.

L'angle de la base triangulaire du support comportant le premier logement peut être par exemple le plus petit des trois angles du triangle de base du support.

Grâce à l'invention, avec l'utilisation de fonte, l'ensemble de lestage est recyclable.

Le châssis d'hydrolienne est avantageusement réalisé de manière à ce que l'on puisse si nécessaire dissocier l'ensemble de lestage du support, soit au moment de l'installation, pour en faciliter le montage, soit ultérieurement en cas de démantèlement ou de déplacement de l'hydrolienne. Pour ce faire, le support et l'ensemble de lestage peuvent être assemblés entre eux, par exemple lors de l'installation, sans être toutefois solidarisés l'un à l'autre.

L'invention a encore pour objet, en combinaison ou indépendamment de ce qui précède, un ensemble de lestage pour un châssis d'hydrolienne, configuré pour coopérer avec un support du châssis d'hydrolienne de manière à assurer le maintien sur le sol sous-marin du châssis, ledit ensemble de lestage présentant une masse volumique comprise entre 6500 kg/m³ et 8000 kg/m³.

L'ensemble de lestage peut par exemple être réalisé avec de la fonte, notamment de la fonte présentant une masse volumique comprise entre 7000 kg/m³ et 7200 kg/m³, en particulier une masse volumique de 7200 kg/m³.

L'ensemble de lestage peut par exemple comporter au moins un premier et un deuxième éléments distincts configurés pour lester chacun une partie du support, notamment pour coopérer respectivement avec un premier et deuxième logements du support. L'ensemble peut encore comporter plus de deux éléments et plus de deux logements.

L'invention a encore pour objet, en combinaison avec ce qui précède, un procédé d'installation d'une hydrolienne comportant un châssis d'hydrolienne tel que défini plus haut, le procédé comprenant les étapes suivantes :
- disposer le support du châssis sur un fond sous-marin ;
- disposer l'ensemble de lestage du châssis pour l'assembler avec le support ;
- fixer au moins un rotor de l'hydrolienne sur le châssis.

Ce type de châssis peut encore être utilisé, sans sortir du cadre de l'invention, pour le maintien des stations techniques et des stations météorologiques.

Grâce au procédé d'installation conforme à l'invention, il est plus aisé d'installer une hydrolienne, le châssis étant de dimensions réduites et relativement compact. De plus, le châssis comporte des parties séparables ou démontables les unes des autres, ce qui permet si nécessaire, de les dissocier ou de moduler le châssis en fonction des besoins.

Enfin, la possibilité de recycler l'ensemble de lestage contribue à la valeur écologique du châssis d'hydrolienne selon l'invention.

### 5. Liste des figures

D'autres caractéristiques et avantages de l'invention apparaîtront plus clairement à la lecture de la description suivante de modes de réalisation de l'invention, donnés à titre d'exemples illustratifs et non limitatifs et du dessin annexé dans lequel :
- la figure 1 est une vue schématique en perspective d'une hydrolienne sur un châssis non conforme à l'invention;
- la figure 2 est une vue de dessus de l'hydrolienne de la figure 1 ;
- la figure 3 est une vue en perspective, schématique et partielle du châssis d'hydrolienne, conforme à un premier mode de réalisation de l'invention ;
- la figure 4 est une vue de côté en perspective schématique et partielle du châssis d'hydrolienne de la figure 3 ;
- la figure 5 représente isolément, de manière schématique et en perspective, un premier élément de l'ensemble de lestage du châssis d'hydrolienne de la figure 3 ;
- la figure 6 représente isolément, de manière schématique et en perspective, un deuxième élément de l'ensemble de lestage du châssis d'hydrolienne de la figure 3 ;
- la figure 7 illustre partiellement, de manière schématique et en perspective, un châssis d'hydrolienne conforme à un deuxième mode de réalisation de l'invention ;
- les figures 8 et 9 sont des vues en coupe transversale respectivement vers le bas et vers le haut du châssis d'hydrolienne de la figure 7, et
- la figure 10 est une vue en coupe, selon une médiane du support, du châssis d'hydrolienne de la figure 7.

### 6. Description détaillée des modes de réalisation de l'invention

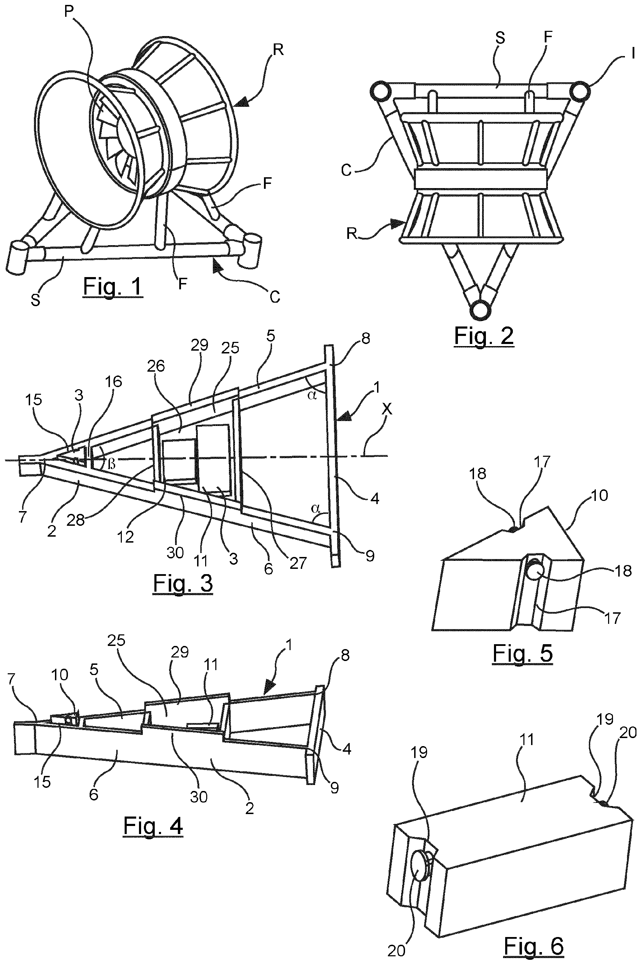

On a représenté sur les figures 1 et 2 un exemple très schématique d'une hydrolienne, non conforme à l'invention, comprenant un rotor R munis de pâles P aptes à tourner avec les courants marins de manière à fournir une énergie mécanique qui est ensuite convertie en énergie électrique de manière à fournir de l'électricité.

Le rotor est disposé sur un châssis d'hydrolienne C non conforme à l'invention qui comprend un système de fixation F du rotor sur un support S formant un tripode à base triangulaire dont les pieds P reposent sur le sol sous-marins, à une profondeur comprise par exemple entre 35 et 40 mètres sous le niveau zéro de la mer.

L'hydrolienne des figures 1 et 2 est présentée et commentée uniquement dans un souci de compréhension du contexte de l'invention.

On a représenté sur la figure 3 un châssis d'hydrolienne 1 conforme à un premier mode de réalisation de l'invention.

Ce châssis d'hydrolienne 1 comprend un support 2 pour une hydrolienne, notamment pour au moins un rotor, le support 2 étant réalisé au moins partiellement en béton, notamment en béton armé.

Conformément à l'invention, le châssis d'hydrolienne 1 comporte également un ensemble de lestage 3 configuré pour coopérer avec le support 2 de manière à assurer le maintien sur le sol sous-marin du châssis d'hydrolienne 1. L'ensemble de lestage présente une masse volumique comprise entre 6500 kg/m³ et 8000 kg/m³.

Dans l'exemple illustré, le support 2 est un tripode, dont les trois pieds n'ont pas été représentés sur la figure, mais qui présente une base triangulaire de type isocèle.

Le support 2 comporte ainsi trois poutres formant entre elles un triangle isocèle, à savoir une poutre de base 4 et deux poutres latérales 5 et 6 de longueurs égales. Dans cet exemple, le châssis d'hydrolienne présente une symétrie par rapport à un axe médian X, formant médiane du support 2, comme illustré.

La base triangulaire du support 2 comporte par ailleurs trois sommets 7, 8 et 9. Les angles α aux sommets 8 et 9 formés respectivement par chacune des poutres latérales 5 et 6 et la poutre de base 4 sont égaux entre eux. L'angle β formé au sommet 7, entre les poutres latérales 5 et 6, est inférieur aux angles α aux sommets 8 et 9. L'angle β est opposé à la poutre de base 4.

Dans l'exemple illustré sur les figures 3 à 6, l'ensemble de lestage 3 comporte un premier élément de lestage 10 et au moins un deuxième élément de lestage 11, et dans l'exemple illustré, un troisième élément de lestage 12.

Le support 2 comporte quant à lui dans cet exemple deux logements, à savoir un premier logement 15 formé au sommet 7 entre les poutres latérales 5 et 6 du support 2 dans un espace de section triangulaire comme illustré. Ce premier logement 15, comporte un fond non visible sur la figure et, outre les poutres latérales 5 et 6 formant des parois latérales du logement 15, une paroi latérale complémentaire 16.

Le premier élément 10 de l'ensemble de lestage 3, visible isolément sur la figure 5, présente une forme sensiblement à base triangulaire agencée pour épouser au moins partiellement des parois latérales du premier logement 15, intérieurement. Comme visible sur la figure 4, le premier élément 10 de l'ensemble de lestage 3 est configuré dans cet exemple pour dépasser verticalement, en hauteur, du support 2. Comme visible sur la figure 5, le premier élément 10 de l'ensemble de lestage 2 comporte sur deux de ses côtés des gorges 17 logeant chacune un piton 18 pour permettre la manutention du premier élément 10 de l'ensemble de lestage 3.

Le deuxième élément 11 de l'ensemble de lestage 3, visible sur la figure 6 isolément, forme un bloc de section sensiblement rectangulaire. Deux côtés opposés parmi les quatre côtés du deuxième élément 11 comportent également des gorges 19. Chaque gorge 19 loge un piton 20 pour permettre la manutention du deuxième élément 11 de l'ensemble de lestage 3.

Le deuxième élément 11 de l'ensemble de lestage 3 et, dans cet exemple, un troisième élément 12 de l'ensemble de lestage 3, sont logés dans un deuxième logement 25 du support 2. Ce deuxième logement 25 comporte un fond 26 ainsi que quatre parois latérales dont deux sont constituées par des portions 29 et 30 respectivement des poutres latérales 5 et 6. Les deux autres poutres latérales 27 et 28 sont formées sensiblement parallèlement à la poutre de base 4 du support 2 ainsi qu'à la poutre latérale 16 du premier logement, la paroi latérale 28 étant la plus proche de la paroi latérale 16. Comme visible en particulier sur la figure 4, la hauteur des deuxième et troisième éléments 11 et 12 de l'ensemble de lestage 3 est inférieure à celles des parois latérales 27, 28, 29 et 30. Les portions 29 et 30 des poutres latérales 5 et 6 formant partie du deuxième logement 25 présentent une hauteur supérieure à celle du reste des poutres 5 et 6, comme visible.

L'ensemble de lestage 3, constitué par les premier, deuxième et troisième éléments 10, 11 et 12 dans cet exemple, est réalisé avec de la fonte, notamment de la fonte présentant une masse volumique de 7200 kg/m³. Comme indiqué précédemment et grâce à l'invention, les dimensions du châssis d'hydrolienne 1 sont réduites grâce à la densité de la fonte ou plus exactement de la masse volumique qui est 3,5 à 4 fois supérieure à celle du béton.

Lors de l'installation de l'hydrolienne, on peut procéder conformément au procédé d'installation selon l'invention comprenant les étapes suivantes : on dispose le support 2 sur un fond sous-marin choisi. Ensuite, on dispose l'ensemble de lestage 3 de manière à l'assembler au support 2 et enfin, on fixe au moins un rotor de l'hydrolienne sur le support.

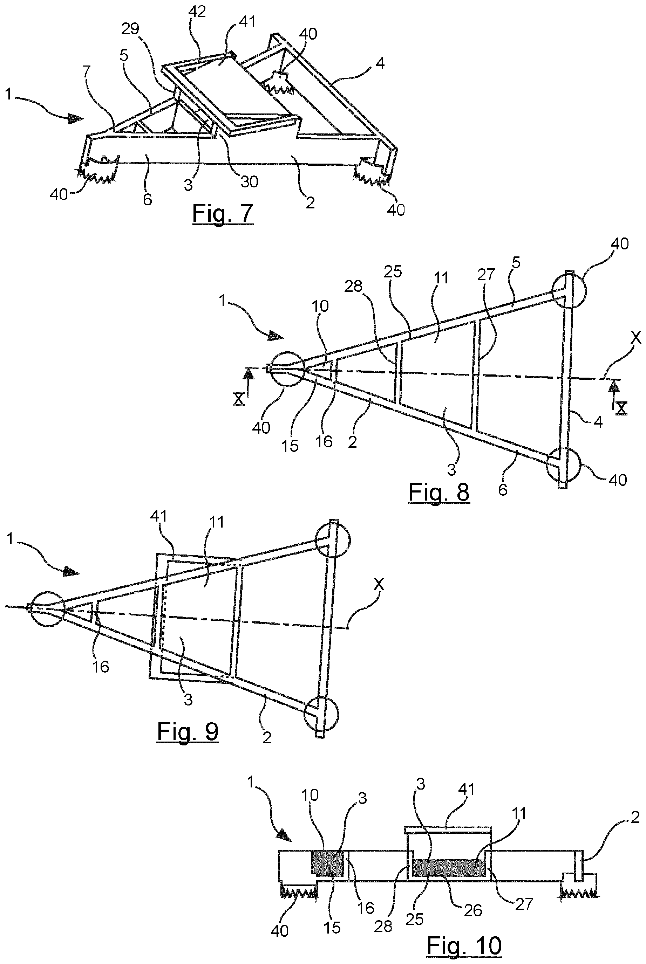

On a représenté sur les figures 7 à 10 un deuxième mode de réalisation de l'invention. Dans ce mode de réalisation, les trois pieds 40 sont représentés, étant dans cet exemple, formés de cylindres avec une découpe en dents de scie pour le contact avec le sol sous-marin, afin notamment de faciliter l'ancrage au sol. Les pieds 40 sont par ailleurs découpés et conformés de manière à être solidaires des sommets de la base triangulaire du support 2.

Dans cet exemple également, l'ensemble de lestage 3 comporte un premier élément 10 et un deuxième élément 11. Le deuxième élément 11 épouse sensiblement intérieurement les parois formant le deuxième logement 25 du support 2, comme visible en particulier sur les figures 8 et 9.

Dans cet exemple également, un couvercle 41 visible en particulier sur les figures 7, 9 et 10, forme partie du châssis d'hydrolienne. Ce couvercle 41 vient recouvrir le deuxième logement 25 en s'appuyant sur les portions 29 et 30 respectivement des poutres latérales 5 et 6 du support 2. Le couvercle 41 comporte en outre un cadre rectangulaire 42, formant ensemble le support de fixation de l'hydrolienne.

Le châssis d'hydrolienne 1 peut comporter un système de fixation non représenté dans un souci de clarté du dessin, le couvercle 41 étant agencé pour recevoir le système de fixation de l'hydrolienne, plus précisément d'au moins un rotor de l'hydrolienne.

L'invention n'est bien sûr pas limitée à l'exemple qui vient d'être décrit.

En particulier, la forme ou le nombre des éléments de l'ensemble de lestage peut être différent sans sortir du cadre de l'invention.

Des systèmes d'attache réversible peuvent être prévus pour solidariser le support et l'ensemble de lestage, tout en permettant un démontage relativement aisé du châssis.

Dans toute la description, les expressions « comprenant un » et « comportant un » doivent être comprises comme étant synonymes respectivement des expressions « comprenant au moins un » et « comportant au moins un » sauf si le contraire est spécifié.

## Revendications

1. Châssis d'hydrolienne (1), comprenant :
- un support (2) pour au moins une hydrolienne, réalisé au moins partiellement en béton,
- un ensemble de lestage (3) configuré pour coopérer avec le support (2) de manière à assurer le maintien sur le sol sous-marin du châssis d'hydrolienne (1), ledit ensemble de lestage (3) présentant une masse volumique comprise entre 6500 kg/m³ et 8000 kg/m³ et étant réalisé avec de la fonte.

2. Châssis d'hydrolienne (1) selon la revendication 1, dans lequel l'ensemble de lestage (3) est réalisé avec de la fonte présentant une masse volumique comprise entre 7000 kg/m³ et 7200 kg/m³, en particulier une masse volumique de 7200 kg/m³.

3. Châssis d'hydrolienne (1) selon la revendication 1 ou 2, dans lequel l'ensemble de lestage (3) comporte au moins un premier et un deuxième éléments (10, 11, 12) distincts configurés pour lester chacun une partie du support (2).

4. Châssis d'hydrolienne (1) selon l'une quelconque des revendications 1 à 3, dans lequel le support (2) comporte au moins un logement (15, 25) formé d'au moins un fond (26) configuré pour recevoir au moins un élément (10, 11, 12) de l'ensemble de lestage (3).

5. Châssis d'hydrolienne (1) selon les revendications 3 et 4, dans lequel le support (2) comporte deux logements (15, 25), à savoir un premier et un deuxième logements, chaque logement (15, 25) étant configuré pour recevoir au moins l'un des éléments (10, 11, 12) de l'ensemble de lestage (3).

6. Châssis d'hydrolienne (1) selon l'une quelconque des revendications 1 à 5, dans lequel le support (2) forme un tripode à base triangulaire, notamment sensiblement isocèle.

7. Châssis d'hydrolienne (1) selon les revendications 3 à 6, dans lequel le premier élément (10) de l'ensemble de lestage (3) est configuré pour lester le premier logement (15) du support (2), formé dans un angle de la base triangulaire du support et au moins le deuxième élément (11) de l'ensemble de lestage (3) est configuré pour lester le deuxième logement (25) formé dans une partie centrale du support (2).

8. Châssis d'hydrolienne (1) selon l'une quelconque des revendications 5 à 7, comprenant un système de fixation d'au moins un rotor de l'hydrolienne, dans lequel le deuxième logement (25) du support (2) comporte au moins deux parois latérales et un couvercle (41) pour recevoir le système de fixation dudit au moins un rotor.

9. Ensemble de lestage (3) pour un châssis d'hydrolienne (1) selon l'une quelconque des revendications 1 à 8, configuré pour coopérer avec un support (2) du châssis d'hydrolienne (1) de manière à assurer le maintien sur le sol sous-marin du châssis d'hydrolienne (1), ledit ensemble de lestage (3) présentant une masse volumique comprise entre 6500 kg/m³ et 8000 kg/m³ étant réalisé avec de la fonte.

## Patentansprüche

1. Rahmen (1) einer Wellenkraftwerk, umfassend:
- einen Träger (2) für mindestens eine Wellenkraftwerk, der mindestens teilweise aus Beton hergestellt ist,
- eine Ballasteinheit (3), die ausgelegt ist, mit dem Träger (2) zusammenzuwirken, um den Halt des Rahmens (1) für die Gezeitenturbine auf dem Meeresboden sicherzustellen, wobei die Ballasteinheit (3) eine Volumenmasse zwischen 6500 kg/m³ und 8000 kg/m³ aufweist und mit Gusseisen ausgebildet ist.

2. Rahmen (1) einer Wellenkraftwerk nach Anspruch 1, wobei die Ballasteinheit (3) mit Gusseisen ausgebildet ist, das eine Volumenmasse zwischen 7000 kg/m³ und 7200 kg/m³ aufweist, insbesondere eine Volumenmasse von 7200 kg/m³.

3. Rahmen (1) einer Wellenkraftwerk nach Anspruch 1 oder 2, wobei die Ballasteinheit (3) mindestens ein erstes und ein davon verschiedenes zweites Element (10, 11, 12) umfasst, die dazu ausgelegt sind, jeweils einen Teil des Trägers (2) zu beschweren.

4. Rahmen (1) einer Wellenkraftwerk nach einem der Ansprüche 1 bis 3, wobei der Träger (2) mindestens einen Sitz (15, 25) umfasst, der aus mindestens einem Boden (26) gebildet ist, der dazu ausgelegt ist, mindestens ein Element (10, 11, 12) der Ballasteinheit (3) aufzunehmen.

5. Rahmen (1) einer Wellenkraftwerk nach den Ansprüchen 3 und 4, wobei der Träger (2) zwei Sitze (15, 25), nämlich einen ersten und einen zweiten Sitz, umfasst, wobei jeder Sitz (15, 25) dazu ausgelegt ist, mindestens eines der Elemente (10, 11, 12) der Ballasteinheit (3) aufzunehmen.

6. Rahmen (1) einer Wellenkraftwerk nach einem der Ansprüche 1 bis 5, wobei der Träger (2) einen Dreifuß mit dreieckiger Basis bildet, insbesondere im Wesentlichen gleichschenklig.

7. Rahmen (1) einer Wellenkraftwerk nach den Ansprüchen 3 bis 6, wobei das erste Element (10) der Ballasteinheit (3) dazu ausgelegt ist, den ersten Sitz (15) des Trägers (2) zu beschweren, der in einem Winkel der dreieckigen Basis des Trägers gebildet ist, und mindestens das zweite Element (11) der Ballasteinheit (3) dazu ausgelegt ist, den zweiten Sitz (25) zu beschweren, der in einem zentralen Teil des Trägers (2) gebildet ist.

8. Rahmen (1) einer Wellenkraftwerk nach einem der Ansprüche 5 bis 7, umfassend ein Befestigungssystem mindestens eines Rotors der Wellenkraftwerk, wobei der zweite Sitz (25) des Trägers (2) mindestens zwei Seitenwände und eine Abdeckung (41) umfasst, um das Befestigungssystem des mindestens einen Rotors aufzunehmen.

9. Ballasteinheit (3) für einen Rahmen (1) einer Wellenkraftwerk nach einem der Ansprüche 1 bis 8, welche ausgelegt ist, mit einem Träger (2) des Rahmens (1) für die Wellenkraftwerk zusammenzuwirken, um den Halt des Rahmens (1) für die Wellenkraftwerk auf dem Meeresboden sicherzustellen, wobei die Ballasteinheit (3) eine Volumenmasse zwischen 6500 kg/m³ und 8000 kg/m³ aufweist und mit Gusseisen ausgebildet ist.

## Claims

1. Frame for an underwater turbine (1), comprising:
- a support (2) for at least one underwater turbine, at least partially made of concrete,
- a ballast assembly (3) that is configured to cooperate with the support (2) in such a way as to ensure the underwater turbine (1) frame is kept on the underwater floor, the said ballast assembly (3) having a density of between 6500 kg/m³ and 8000 kg/m³, and being made of cast iron.

2. Frame for an underwater turbine (1) according to claim 1, wherein the ballast assembly (3) is made of cast iron having a density of between 7000 kg/m³ and 7200 kg/m³, in particular a density of 7200 kg/m³.

3. Frame for an underwater turbine (1) according to claim 1 or 2, wherein the ballast assembly (3) comprises at least a first and a second distinct element (10, 11, 12) each configured to ballast a part of the support (2).

4. Frame for an underwater turbine (1) according to any one of the claims 1 to 3, wherein the support (2) comprises at least one housing (15, 25) comprising at least one base (26) that is configured to receive at least one element (10, 11, 12) of the ballast assembly (3).

5. Frame for an underwater turbine (1) according to claims 3 and 4, wherein the support (2) comprises two housings (15, 25), i.e. a first and a second housing, each housing (15, 25) being configured to receive at least one of the elements (10, 11, 12) of the ballast assembly (3).

6. Frame for an underwater turbine (1) according to any one of claims 1 to 5, wherein the support (2) forms a tripod with a triangular base, in particular, substantially isosceles in shape.

7. Frame for an underwater turbine (1) according to claims 3 to 6, wherein the first element (10) of the ballast assembly (3) is configured to ballast the first housing (15) of the support (2) that is formed in an angle of the triangular base of the support, and wherein at least the second element (11) of the ballast assembly (3) is configured to ballast the second housing (25) that is formed in a central part of the support (2).

8. Frame for an underwater turbine (1) according to any one of claims 5 to 7, comprising a system for fixing at least one rotor of the underwater turbine, wherein the second housing (25) of the support (2) comprises at least two side walls and a cover (41) to receive the fixing system of the said at least one rotor.

9. Ballast assembly (3) for a frame for an underwater turbine (1) according to any one of claims 1 to 8, wherein it is configured to interact with a support (2) of the underwater turbine (1) frame in order to ensure that the underwater turbine (1) frame is kept on the underwater floor, the said ballast assembly (3) having a density of between 6500 kg/m³ and 8000 kg/m³, and being made of cast iron.
